# EUROPEAN PATENT SPECIFICATION

(11) **EP 3 270 180 B1**
(45) Date of publication and mention of the grant of the patent: **28.08.2019**
(21) Application number: 17180919.7
(22) Date of filing: 12.07.2017
(51) Int. Cl.: G01S 13/34, G01S 13/58, G01S 13/93, G01S 7/35

(54) **SIGNAL PROCESSING APPARATUS FOR GENERATING A RANGE-DOPPLER MAP**
SIGNALVERARBEITUNGSVORRICHTUNG ZUR ERZEUGUNG EINER ENTFERNUNGS-DOPPLER-KARTE
APPAREIL DE TRAITEMENT DE SIGNAL POUR GÉNÉRER UNE CARTE DE DISTANCE/DOPPLER

(30) Priority: 13.07.2016 GB 201612142
(43) Date of publication of application: 17.01.2018
(73) Proprietor: AptCore Ltd, Bristol BS1 6QH (GB)
(72) Inventor: STYLES, Timothy, Bristol BS1 6QH (GB)
(74) Representative: Gillard, Matthew Paul

(56) References cited:
- US-A1- 2015 355 322
- US-A1- 2016 124 086
- US-B1- 6 538 599
- EUGIN HYUN ET AL: "Hardware architecture design and implementation for FMCW radar signal processing algorithm", PROCEEDINGS OF THE 2014 CONFERENCE ON DESIGN AND ARCHITECTURES FOR SIGNAL AND IMAGE PROCESSING, EUROPEAN ELECTRONIC CHIPS & SYSTEMS DESIGN INITIAT, 8 October 2014 (2014-10-08), pages 1-6, XP032781130, DOI: 10.1109/DASIP.2014.7115643 [retrieved on 2015-05-29]

## Description

### Technical Field

The present invention relates to radar detection and radar signal processing.

### Background to the Invention

Frequency Modulated Continuous Wave (FMCW) radar systems are becoming prevalent in automotive, security and surveillance markets, where they are used to measure position and velocity, and to classify detected objects.

In a typical stepped FMCW radar system, the carrier frequency is modulated with a digitally generated linear ramp. At each step in the ramp, the received signal is demodulated and the phase is sampled. A set of samples from a single ramp in the time domain can be transformed to the frequency domain to show the signal returned from each distance, known as the range profile. [A. Stove, "Linear FMCW radar techniques"].

If the distance to the object changes between samples, the frequency of the demodulated signal becomes a function of the distance and the rate of change in distance, or speed. This ambiguity can be resolved using multiple ramps, and several schemes have been described [V. Winker, "Range Doppler detection for automotive FMCW radars"].

Sawtooth modulation consists of a set of identical ramps, where the samples for each ramp are converted to a range profile using a first Fast Fourier Transform (FFT). The change in phase between each range profile is a function of the carrier frequency and speed of the object. With equally spaced ramps, this rate of change in phase, or Doppler frequency, can be determined using a second FFT.

Time domain samples from measurements using sawtooth modulation, can be converted to the frequency domain using a two-dimensional FFT. This technique is known as range-Doppler processing and each value in the two-dimensional result provides the signal amplitude and phase for each speed and distance. The two dimensional result is known as a range-Doppler map.

The maximum range of an FMCW radar system depends on the Signal to Noise Ratio (SNR) of the received signal, where the detection range can be increased by increasing the SNR. Multiple measurements can be integrated to increase the SNR of an object if the noise is random.

Multiple range-Doppler maps can be added together to increase the Signal to Noise Ratio. Signals with a constant range and Doppler speed are multiplied by the number of measurements being integrated, while the random noise increases by the square root of the number of measurements. The resulting SNR is therefore also increased by the square root of the number of measurements. This applies equally to interference signals and the signals from stationary objects.

Signals corresponding to real objects with a non-zero Doppler speed do not have a constant range, although their signal may appear in the same range cell for a number of measurements. For example, if an object is travelling at 5 meters per second (18 km/h) and two measurements are taken 0.1 seconds apart, the change in range will be 0.5 metres. If the range resolution is 1 metre then the signal from each pair of measurements will appear at the same range and the SNR will increase by the square root of two.

A technique has been described [G. T. David, "Noncoherent gain enhancement technique for non-stationary targets"] to combine measurements along hypothesised range-Doppler trajectories. E. Hyun ET AL, "Hardware architecture design and implementation for FMCW radar signal processing algorithm" discloses a Frequency Modulation Continuous Wave (FMCW) radar based on a two-dimensional Fast Fourier Transform, which stores detected data over several PRIs in a 3D cube structure formed by 2D range-Doppler maps.

Radio frequency interference can appear as a strong coherent signal to FMCW radar systems. Sources of interference include internal oscillators such as switch mode power supplies and digital circuits. Integrating multiple measurements does not remove the interference, which appears at a constant range and Doppler speed.

### Summary of Invention

In accordance with the present invention, respective apparatuses and system, as set forth in the independent claims are provided. Embodiments of the invention are claimed in the dependent claims.

According to a first aspect of the present invention there is provided signal processing apparatus for generating a range-Doppler map, the apparatus comprising: a two-dimensional fast Fourier transform (FFT) compute unit for computing a range-Doppler map; a memory for storing a computed range-Doppler map; a warping unit for shifting the stored range-Doppler map; and an integrator for adding a current range-Doppler map to a warped version of a previous range-Doppler map.

The apparatus of the present invention allows the entire range-Doppler map to be integrated independently from any knowledge of signals or targets. This has the effect of increasing the SNR of the range-Doppler map and reducing interfering signals relative to signals from real objects.

The signal processing apparatus may further comprise: a second memory for storing a second range-Doppler map, and the first integrator may be configured to add the current range Doppler map, output by the two-dimensional FFT compute unit, and a shifted version of a previous range-Doppler map output by the first warping unit.

The second memory may be configured to receive a range-Doppler map output by the first memory.

Alternatively, the second memory may be configured to receive a range-Doppler map output by the two-dimensional FFT compute unit.

The signal processing apparatus may further comprise: a second warping unit for shifting the range-Doppler map stored in the second memory, and the first integrator may be configured to add the current range Doppler map, output by the two-dimensional FFT compute unit, a shifted version of a previous range-Doppler map output by the first warping unit and a shifted version of a previous range-Doppler map output by the second warping unit.

The signal processing apparatus may further comprise a second warping unit for shifting the stored range-Doppler map and a second integrator, and the first integrator may be configured to add the current range Doppler map, output by the two-dimensional FFT compute unit and a shifted version of a previous range-Doppler map output by the first warping unit, and the second integrator may be configured to add the current range Doppler map, output by the two-dimensional FFT compute unit and a shifted version of a previous range-Doppler map output by the second warping unit.

According to a second aspect of the invention there is provided signal processing apparatus for generating a range-Doppler map, the apparatus comprising: a two-dimensional fast Fourier transform (FFT) compute unit for computing a range-Doppler map; a first integrator; and a first warping unit, wherein the first warping unit is configured to receive a range-Doppler map output by the first integrator and to shift the received range-Doppler map, and the first integrator is configured to add a current range-Doppler map, output by the two-dimensional FFT compute unit and the shifted version of a previous range-Doppler map output by the first warping unit.

The signal processing apparatus may further comprise: a second integrator; and a second warping unit, wherein the second warping unit is configured to receive a range-Doppler map output by the second integrator and to shift the received range-Doppler map, and the second integrator is configured to add a current range-Doppler map, output by the two-dimensional FFT compute unit and the shifted version of a previous range-Doppler map output by the second warping unit.

According to a third aspect of the invention there is provided radar system including signal processing apparatus according to the first or second aspect.

### Brief Description of the Drawings

Embodiments of the invention will now be described, strictly by way of example only, with reference to the accompanying drawings, of which:
Figure 1 is a schematic illustration of a radar system including signal processing apparatus for range-Doppler processing;
Figure 2 is a schematic illustration of signal processing apparatus for range-Doppler processing, in which two range-Doppler maps are integrated to generate one output;
Figure 3 is a schematic illustration of signal processing apparatus for range-Doppler processing, in which more than two range-Doppler maps are integrated to generate one output;
Figure 4 is a schematic illustration of signal processing apparatus for range-Doppler processing, in which two range-Doppler maps are integrated using different warping units to generate two outputs;
Figure 5 is a schematic illustration of signal processing apparatus for range-Doppler processing, in which range-Doppler maps are continuously integrated to generate one output;
Figure 6 is a schematic illustration of signal processing apparatus for range-Doppler processing, in which range-Doppler maps are continuously integrated using different warping units to generate two outputs; and
Figure 7 is an illustration of two range-Doppler maps, before and after warping. The second range-Doppler map has been warped by shifting the range-profiles up or down in range in proportion to their Doppler speed.
Figure 8 is an illustration of two integrated range-Doppler maps, with and without warping.

### Description of the Embodiments

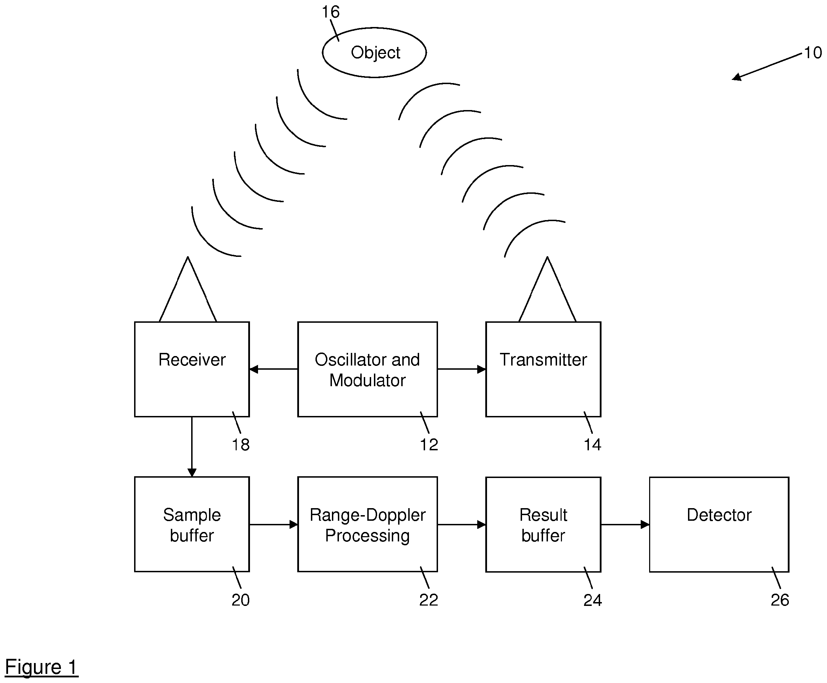

Referring first to Figure 1, a radar system is shown generally at 10, and comprises an oscillator and modulator 12 for generating a signal to a transmitter 14 and receiver 18. The receiver 18 mixes the signal reflected from the object 16 with the transmitted signal, and the result is sampled and stored in a memory (sample buffer) 20. When the sample buffer 20 is full the set of samples is processed by the range-Doppler processing unit 22 and the results of this processing are stored in a further memory (result buffer) 24. A detector 26 is provided for detecting objects in the results of the range-Doppler processing stored in the result buffer 24.

The range-Doppler processing unit 22 is configured to take into account the shift in range of a signal from a moving object across multiple range-Doppler maps. This shift is dependent on the Doppler speed (i.e. the speed towards or away from the radar) and not the true velocity of the object, which may be travelling at an angle to the radar line of sight. All signals along a given range profile in the range-Doppler map have the same Doppler speed, and therefore all signals in the range profile require the same shift in range between measurements. Before the range-Doppler map from one measurement can be successfully integrated with the range-Doppler map from the next measurement, a shift is applied to each range profile.

The range profile corresponding to zero Doppler speed is not shifted before integration. The first column to the positive side is shifted up in range by an amount depending on the Doppler speed resolution and the period between the measurements. For example, if the period between measurements is 0.1 seconds and the Doppler resolution is 0.28 metres per second (1 km/h), a 0.028 metre shift is applied to the column. The first column to the negative side of zero Doppler is shifted down in range by the same amount. The second column to each side is shifted twice as far, and so on.

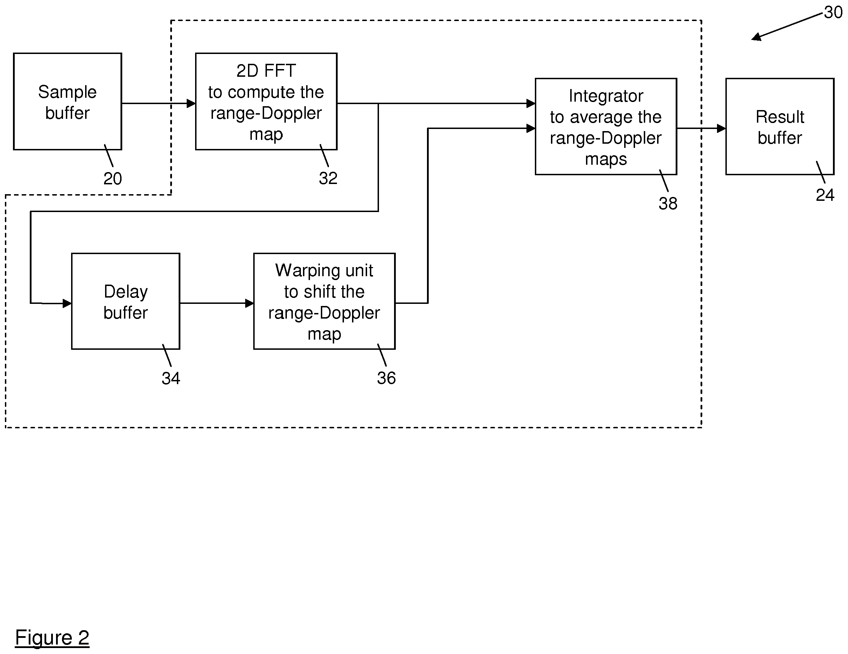

Various alternative configurations of the range-Doppler processing unit 22 will now be described, with reference to Figures 2 to 6.

Figure 2 is a schematic illustration of the sample buffer 20, range-Doppler processing unit 22 and result buffer 24 of the radar system 10. To aid understanding of the present invention, the range-Doppler processing unit 22 is shown and described as comprising a number of functional units. However, it is to be appreciated that the functional units described and shown herein are not necessarily representative of physical components of a physical implementation of the signal processing apparatus.

Figure 2 shows a range-Doppler processing unit 30 based around a two dimensional Fast Fourier Transform compute unit 32. A delay buffer 34 receives and stores the range-Doppler map output by the 2D FFT compute unit 32 until a new range-Doppler map is output by the compute unit 32. When a new range-Doppler map is output by the compute unit 32, the range-Doppler map stored in the delay buffer 34 is passed to a warping unit 36, which outputs a warped version of the stored range-Doppler map to an integrator 38.

The warping unit 36 re-samples each range profile in the stored range-Doppler map with a shift proportional to the period of time between the new range-Doppler map the stored range-Doppler map and the Doppler frequency of the range profile. The range profile for zero Doppler is unchanged. The range profiles for non-zero Doppler frequencies are shifted by a range equivalent to the time period between the range-Doppler maps and the speed associated with the Doppler frequency of the range profile. The warping unit 36 between the delay buffer 34 and the integrator 38 therefore ensures that that the signals at every point in the range-Doppler map are integrated with a shift in range proportional to the Doppler speed of the point.

The integrator 38 receives the range-Doppler map output by the compute unit 32. The integrator 38 is operative to integrate the two range Doppler maps at its input (i.e. the range Doppler map output by the compute unit 32 and the warped version of the previous range-Doppler map output by the warping unit 36) by aligning the two range-Doppler maps and adding them together, and to output the resulting single range-Doppler map to the result buffer 24.

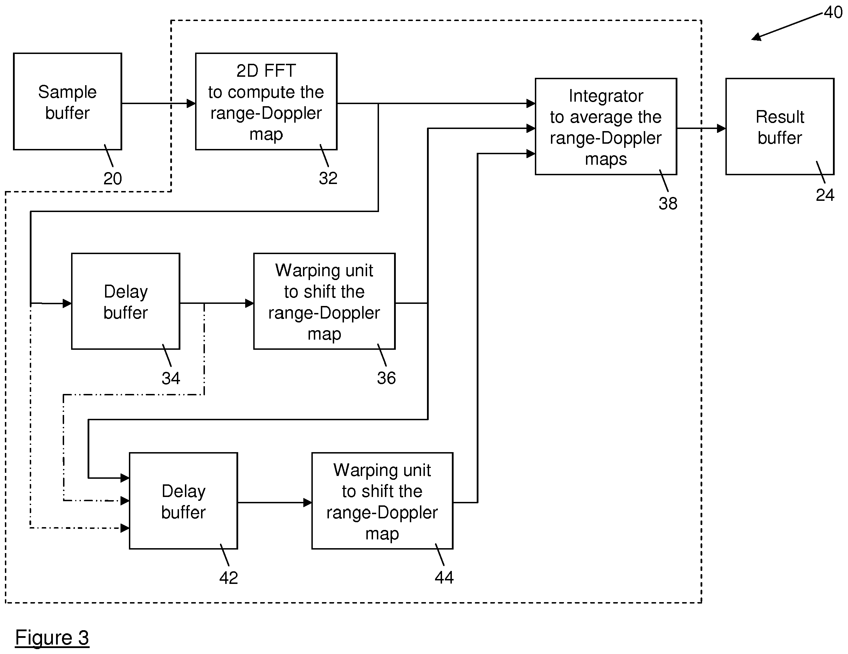

Figure 3 shows an alternative range-Doppler processing unit generally at 40. The range-Doppler processing unit 40 is generally similar to the one shown generally at 30 in Figure 2, but includes, in the illustrated embodiment, a second delay buffer 42 which receives a shifted range-Doppler map output by the warping unit 36 and a second warping unit 44 which outputs a warped version of the range-Doppler map stored in the second delay buffer 42 to the integrator 38, in order that a third sequential range-Doppler map from the 2D FFT unit 32 can be integrated by the integrator 38. It will be appreciated that any number of delay buffers and warping units may be included to integrate multiple range-Doppler maps.

Alternatively, the input to the delay buffer 42 can be taken from the output of delay buffer 34, as indicated by the chain-dash arrow in Figure 3, with the warping unit 44 configured to apply a shift appropriate to the combined delay of delay buffers 34 and 42. The result is similar to the original configuration, with the advantage that a single warping operation is applied (by the second warping unit 44) to the range-Doppler map and the disadvantage that the warping unit 44 must apply a larger shift in range.

Alternatively, the input to delay buffer 42 can be taken from the output of the 2D FFT compute unit 32, as indicated by the chain-dash arrow in Figure 3, with the delay at the input to warping unit 44 configured independently from the delay of delay buffer 34. The result is similar to the original configuration, with the disadvantage that the delay buffer 42 must apply a larger delay.

Although in the exemplary embodiments described above the delay buffer 34 is placed at the input to the warping unit 36, those skilled in the relevant art will readily appreciate that the delay buffer 34 could be located elsewhere in the range-Doppler processing unit 30 to achieve the same effect. For example, the delay buffer 34 could be placed at the output to the warping unit 36, or form part of the integrator 38.

Objects travelling faster than the maximum Doppler speed wrap around the range-Doppler map. For example, with a maximum unambiguous Doppler speed of 128 km/h, an object travelling at 150 km/h away from the radar will appear to be travelling at 106 km/h towards the radar. A second integrator may be used with a shift corresponding to wrapped signals. While these objects are spread in range in the first result, they add coherently in the second result. This makes it possible to resolve the Doppler speed ambiguity in systems with a low sweep repetition rate, and it therefore enables lower sampling rates and reduced hardware power and cost.

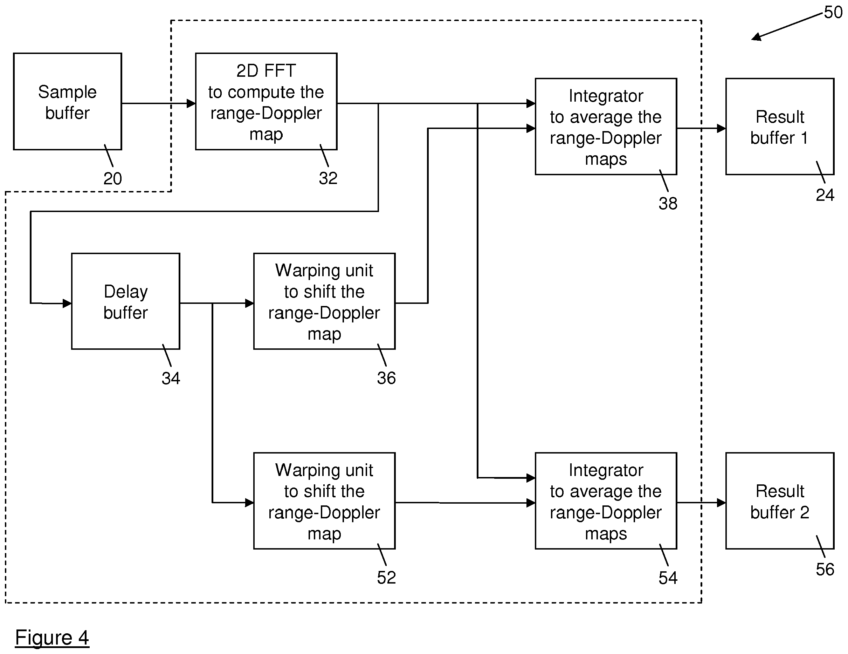

Figure 4 shows a further alternative range-Doppler processing unit generally at 50. The range-Doppler processing unit 50 is generally similar to the one shown generally at 30 in Figure 2, but includes a second warping unit 52, a second integrator 54 and a second result buffer 56, so that the two range-Doppler maps from the output of the 2D FFT compute unit 32 and the delay buffer 24 are integrated with different shifts applied by the two warping units 36 and 52. It will be appreciated that the multiple integrator approach of Figure 4 may be combined with the multiple delay buffer approach of Figure 3 in order to calculate multiple integrated range-Doppler maps from multiple incoming range-Doppler maps.

The parallel integration of multiple range-Doppler maps can be replaced with the continuous integration of each incoming range-Doppler map with a warped copy of the previous output range-Doppler map. This is similar to using an Infinite Impulse Response filter instead of a Finite Response Filter.

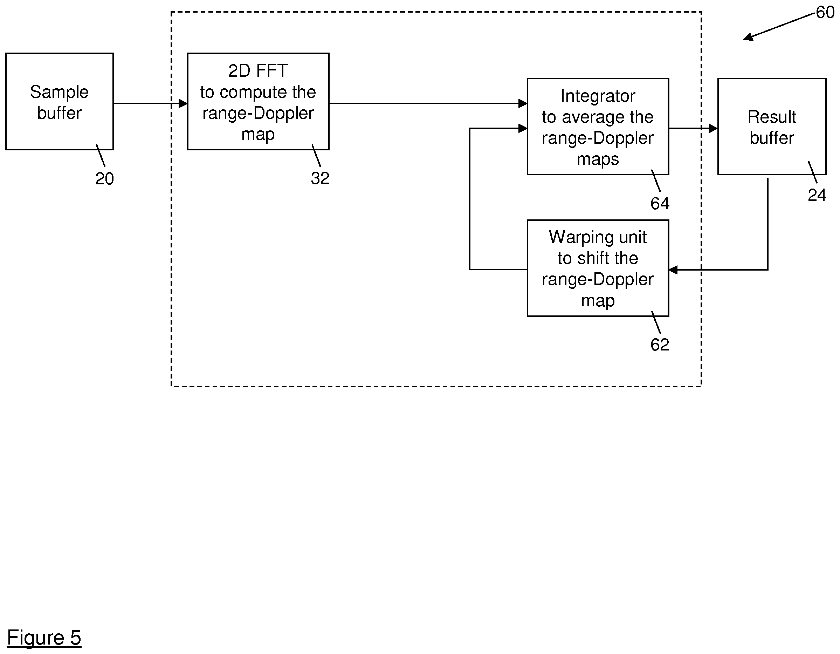

Figure 5 shows a further alternative range-Doppler processing unit generally at 60. The range-Doppler processing unit 60 includes warping unit 62 and integrator 64 to continuously integrate sequential range-Doppler maps from the 2D FFT unit 32. The single range-Doppler map output from the integrator is stored in the result buffer 24. At every point in the range-Doppler map the warping unit 62 applies a shift in range proportional to the Doppler speed of the point.

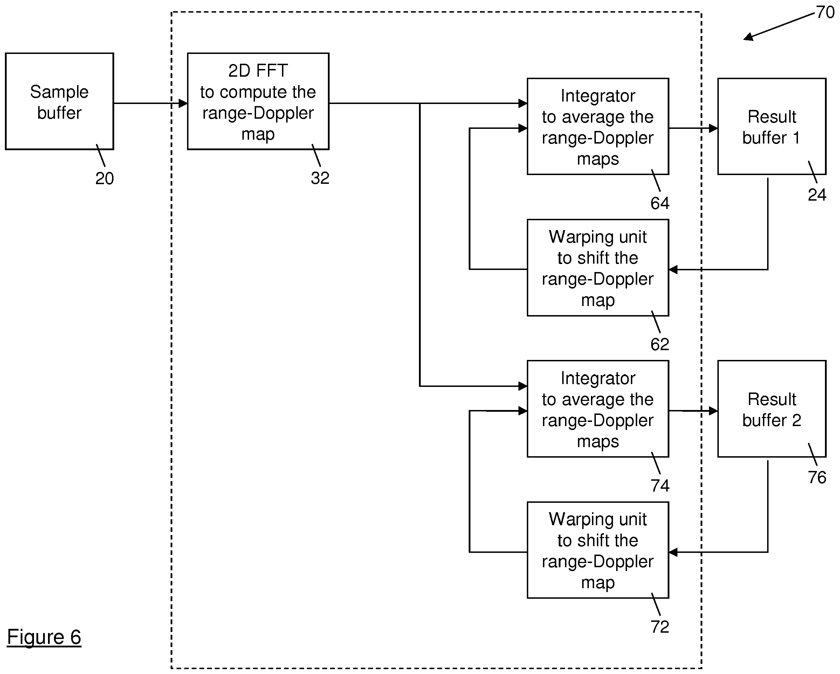

Figure 6 shows a further alternative range-Doppler processing unit generally at 70. The range-Doppler processor unit 70 is generally similar to the one shown generally at 60 in Figure 5, and includes second warping unit 72, a second integrator 74 and a second result buffer 76, so that the range-Doppler maps output from the 2D FFT compute unit 32 are continuously integrated with different shifts applied by the two warping units 62 and 72.

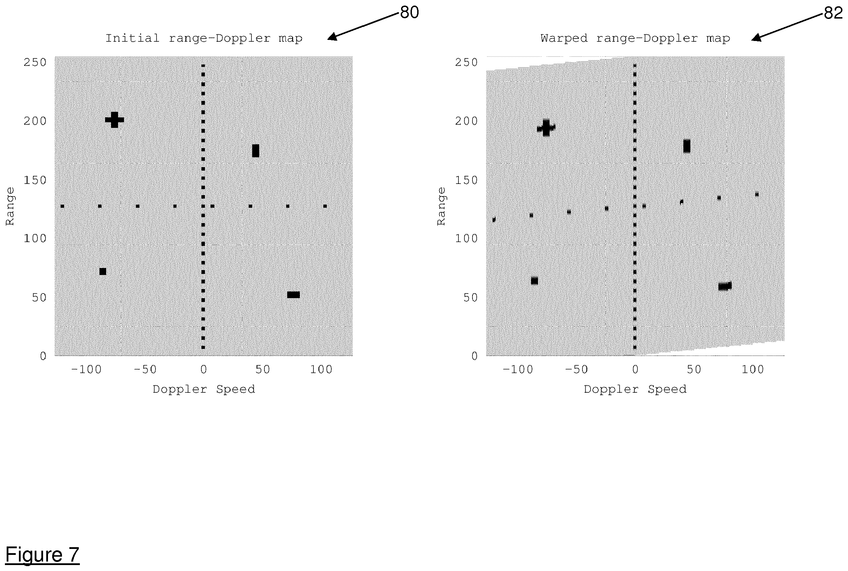

Figure 7 is a graphical illustration of the type of warping that can be applied to a range-Doppler map using the warping units of Figures 2 to 5. An artificially generated range-Doppler map is shown generally at 80. Artificial signals are shown in black, with small signals across all ranges at zero Doppler speed, small signals mid-range at eight Doppler speeds, and four larger signals. Artificial signals have been used to help in the interpretation of the shift and are not intended to indicate the appearance of real signals.

The warped range-Doppler map is shown generally at 82. Signals with a positive Doppler speed have shifted up in range, with the shift proportional to their Doppler speed. Signals with a negative Doppler speed have shifted down in range, with a shift proportional to their Doppler speed. A fixed shift is applied to every point in the range-Doppler map independent of any signal present. Interpolation has been used where the shift is not an integer number of points.

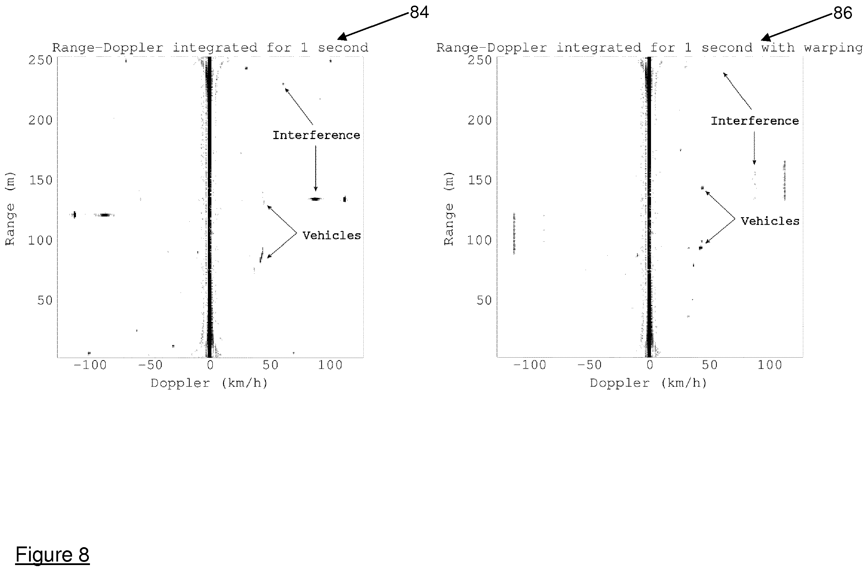

Figure 8 shows the result of integrating range-Doppler maps with and without the range-Doppler processing apparatus of Figure 3. Without the range-Doppler processing apparatus the interference signals from multiple range-Doppler maps are combined, while the signals from vehicles are spread in range. With the range-Doppler processing apparatus the interference signals are spread in range, while the signals from vehicles are combined at a single range corresponding to the range of the vehicle in the current range-Doppler map.

The integrated range-Doppler map 86 of Figure 8 arising from the warping operations described above has an improved signal to noise ratio for real objects in comparison to the unwarped range-Doppler map 84. This leads to improved detection of objects, and improved discrimination between real objects and noise in the range-Doppler map.

The range-Doppler processing unit 30 has been described herein in terms of functional units. It will be appreciated that the range-Doppler processing unit 30 may be implemented in many different ways, for example using one or more Application Specific Integrated Circuits (ASICs), Field Programmable Gate Arrays (FPGAs), bespoke Integrated Circuits (ICs) or Digital Signal Processors (DSPs). The range-Doppler processing apparatus may also be implemented in software running on appropriately configured processing hardware.

## Claims

1. Signal processing apparatus (30, 40, 50) for generating a range-Doppler map (86), the apparatus comprising:
a two-dimensional fast Fourier transform (FFT) compute unit (32) for computing a range-Doppler map (80), the range-Doppler map including a plurality of points, each point having a range value and a Doppler speed value; and
a first memory (34) for storing a first range-Doppler map output by the two-dimensional FFT unit;
**characterised in that** the apparatus further comprises:
a first warping unit (36) for applying a shift in range to each point in the stored range-Doppler map; and
a first integrator (38) for adding a current range-Doppler map, output by the two-dimensional FFT compute unit, and a shifted version (82) of a previous range-Doppler map output by the first warping unit;
wherein the shift in range is proportional to the period of time between the current range-Doppler map and to the stored range-Doppler map and the Doppler speed of each point.

2. Signal processing apparatus (40) according to claim 1 further comprising:
a second memory (42) for storing a second range-Doppler map (80),
wherein the first integrator (38) is configured to add the current range Doppler map, output by the two-dimensional FFT compute unit (32) and a shifted version (82) of a previous range-Doppler map output by the first warping unit (36).

3. Signal processing apparatus (40) according to claim 2 wherein the second memory (42) is configured to receive a range-Doppler map (80) output by the first memory (34).

4. Signal processing apparatus (40) according to claim 2 wherein the second memory (42) is configured to receive a range-Doppler map (80) output by the two-dimensional FFT compute unit (32).

5. Signal processing apparatus (40) according to any one of claims 2 to 4 further comprising:
a second warping unit (44) for shifting the range-Doppler map stored in the second memory (42),
wherein the first integrator (38) is configured to add the current range Doppler map, output by the two-dimensional FFT compute unit (32), a shifted version (82) of a previous range-Doppler map output by the first warping unit (36) and a shifted version (82) of a previous range-Doppler map output by the second warping unit (44).

6. Signal processing apparatus (50) according to claim 1 further comprising:
a second warping unit (52) for shifting the stored range-Doppler map; and
a second integrator (54),
wherein the first integrator (38) is configured to add the current range Doppler map, output by the two-dimensional FFT compute unit (32) and a shifted version (82) of a previous range-Doppler map output by the first warping unit (36), and wherein the second integrator is configured to add the current range Doppler map, output by the two-dimensional FFT compute unit and a shifted version (82) of a previous range-Doppler map output by the second warping unit.

7. Signal processing apparatus (60, 70) for generating a range-Doppler map (86), the apparatus comprising:
a two-dimensional fast Fourier transform (FFT) compute unit (32) for computing a range-Doppler map (80), the range-Doppler map including a plurality of points, each point having a range value and a Doppler speed value;
a first integrator (64); and
a first warping unit (62),
wherein the first warping unit is configured to receive a range-Doppler map (80) output by the first integrator;
**characterised in that**:
the first warping unit is further configured to apply a shift in range to each point in the received range-Doppler map;
the first integrator is configured to add a current range-Doppler map (80), output by the two-dimensional FFT compute unit and the shifted version (82) of a previous range-Doppler map output by the first warping unit; and
the shift in range is proportional to the period of time between the current range-Doppler map and the stored range-Doppler map and to the Doppler speed of each point.

8. Signal processing apparatus (70) according to claim 7 further comprising:
a second integrator (74); and
a second warping unit (72),
wherein the second warping unit is configured to receive a range-Doppler map (80) output by the second integrator and to shift the received range-Doppler map, and the second integrator is configured to add a current range-Doppler map (80), output by the two-dimensional FFT compute unit (32) and the shifted version (82) of a previous range-Doppler map output by the second warping unit.

9. A radar system (10) including signal processing apparatus (30, 40, 50, 60, 70) according to any one of the preceding claims.

## Patentansprüche

1. Signalverarbeitungsvorrichtung (30, 40, 50) zum Erzeugen einer Bereichs-Doppler-Karte (86), wobei die Vorrichtung Folgendes umfasst:
eine zweidimensionale schnelle Fouriertransformation (FFT)-Berechnungseinheit (32) zum Berechnen einer Bereichs-Doppler-Karte (80), wobei die Bereichs-Doppler-Karte mehrere Punkte beinhaltet, wobei jeder Punkt einen Bereichswert und einen Dopplergeschwindigkeitswert aufweist; und
einen ersten Speicher (34) zum Speichern einer ersten Bereichs-Doppler-Karte, die von der zweidimensionalen FFT-Einheit ausgegeben wird;
**dadurch gekennzeichnet, dass** die Vorrichtung ferner Folgendes umfasst:
eine erste Verzerrungseinheit (36) zum Anwenden einer Bereichsverschiebung auf jeden Punkt in der gespeicherten Bereichs-Doppler-Karte; und
einen ersten Integrator (38) zum Hinzufügen einer aktuellen Bereichs-Doppler-Karte, die von der zweidimensionalen FFT-Berechnungseinheit ausgegeben wird, und einer verschobenen Version (82) einer früheren Bereichs-Doppler-Karte, die von der ersten Verzerrungseinheit ausgegeben wird;
wobei die Bereichsverschiebung proportional zur Zeitspanne zwischen der aktuellen Bereichs-Doppler-Karte und der gespeicherten Bereichs-Doppler-Karte und der Dopplergeschwindigkeit jedes Punktes ist.

2. Signalverarbeitungsvorrichtung (40) nach Anspruch 1, ferner umfassend:
einen zweiten Speicher (42) zum Speichern einer zweiten Bereichs-Doppler-Karte (80), wobei der erste Integrator (38) konfiguriert ist, um die aktuelle Bereichs-Doppler-Karte, die von der zweidimensionalen FFT-Berechnungseinheit (32) ausgegeben wird und einer verschobenen Version (82) einer früheren Bereichs-Doppler-Karte, die von der ersten Verzerrungseinheit (36) ausgegeben wird, hinzuzufügen.

3. Signalverarbeitungsvorrichtung (40) nach Anspruch 2, wobei der zweite Speicher (42) konfiguriert ist, um eine Bereichs-Doppler-Karte (80), die von dem ersten Speicher (34) ausgegeben wird, zu empfangen.

4. Signalverarbeitungsvorrichtung (40) nach Anspruch 2, wobei der zweite Speicher (42) konfiguriert ist, um eine Bereichs-Doppler-Karte (80), die von der zweidimensionalen FFT-Berechnungseinheit (32) ausgegeben wird, zu empfangen.

5. Signalverarbeitungsvorrichtung (40) nach einem der Ansprüche 2 bis 4, ferner umfassend:
eine zweite Verzerrungseinheit (44) zum Verschieben der im zweiten Speicher (42) gespeicherten Bereichs-Doppler-Karte,
wobei der erste Integrator (38) konfiguriert ist, um die aktuelle Bereichs-Doppler-Karte, die von der zweidimensionalen FFT-Berechnungseinheit (32) ausgegeben wird, hinzuzufügen,
einer verschobenen Version (82) einer früheren Bereichs-Doppler-Karte, die von der ersten Verzerrungseinheit (36) ausgegeben wird, und
einer verschobenen Version (82) einer früheren Bereichs-Doppler-Karte, die von der zweiten Verzerrungseinheit (44) ausgegeben wird.

6. Signalverarbeitungsvorrichtung (50) nach Anspruch 1, ferner umfassend:
eine zweite Verzerrungseinheit (52) zum Verschieben der gespeicherten Bereichs-Doppler-Karte; und
einen zweiten Integrator (54),
wobei der erste Integrator (38) konfiguriert ist, um die aktuelle Bereichs-Doppler-Karte, die von der zweidimensionalen FFT-Berechnungseinheit (32) ausgegeben wird, und einer verschobenen Version (82) einer früheren Bereichs-Doppler-Karte, die von der ersten Verzerrungseinheit (36) ausgegeben wird, hinzuzufügen, und wobei der zweite Integrator konfiguriert ist, um die aktuelle Bereichs-Doppler-Karte, die von der zweidimensionalen FFT-Berechnungseinheit ausgegeben wird, und einer verschobenen Version (82) einer früheren Bereichs-Doppler-Karte, die von der zweiten Verzerrungseinheit ausgegeben wird, hinzuzufügen.

7. Signalverarbeitungsvorrichtung (60, 70) zum Erzeugen einer Bereichs-Doppler-Karte (86), wobei die Vorrichtung Folgendes umfasst:
eine zweidimensionale schnelle Fouriertransformation (FFT)-Berechnungseinheit (32) zum Berechnen einer Bereichs-Doppler-Karte (80), wobei die Bereichs-Doppler-Karte mehrere Punkte beinhaltet, wobei jeder Punkt einen Bereichswert und einen DopplerGeschwindigkeitswert aufweist;
einen ersten Integrator (64); und
eine erste Verzerrungseinheit (62),
wobei die erste Verzerrungseinheit konfiguriert ist, um eine Bereichs-Doppler-Karte (80), die von dem ersten Integrator ausgegeben wird, zu empfangen;
**dadurch gekennzeichnet, dass**:
die erste Verzerrungseinheit ferner konfiguriert ist, um eine Bereichsverschiebung auf jeden Punkt in der empfangenen Bereichs-Doppler-Karte anzuwenden;
der erste Integrator konfiguriert ist, um eine aktuelle Bereichs-Doppler-Karte (80), die von der zweidimensionalen FFT-Berechnungseinheit ausgegeben wird, und der verschobenen Version (82) einer früheren Bereichs-Doppler-Karte, die von der ersten Verzerrungseinheit ausgegeben wird, hinzuzufügen; und
die Bereichsverschiebung proportional zur Zeitspanne zwischen der aktuellen Bereichs-Doppler-Karte und der gespeicherten Bereichs-Doppler-Karte und zur Dopplergeschwindigkeit jedes Punktes ist.

8. Signalverarbeitungsvorrichtung (70) nach Anspruch 7, ferner umfassend:
einen zweiten Integrator (74); und
eine zweite Verzerrungseinheit (72),
wobei die zweite Verzerrungseinheit konfiguriert ist, um eine Bereichs-Doppler-Karte (80), die von dem zweiten Integrator ausgegeben wird zu empfangen und um die empfangene Bereichs-Doppler-Karte zu verschieben, und der zweite Integrator konfiguriert ist, um eine aktuelle Bereichs-Doppler-Karte (80), die von der zweidimensionalen FFT-Berechnungseinheit (32) ausgegeben wird, und der verschobenen Version (82) einer früheren Bereichs-Doppler-Karte, die von der zweiten Verzerrungseinheit ausgegeben wird, hinzuzufügen.

9. Radarsystem (10) mit einer Signalverarbeitungsvorrichtung (30, 40, 50, 60, 70) nach einem der vorangehenden Ansprüche.

## Revendications

1. Appareil de traitement de signaux (30, 40, 50) permettant de générer une carte de distance Doppler (86), l'appareil comprenant :
une unité de calcul de transformée de Fourier rapide (TFR) en deux dimensions (32) permettant de calculer une carte de distance Doppler (80), la carte de distance Doppler comprenant une pluralité de points, chaque point ayant une valeur de distance et une valeur de vitesse Doppler ; et
une première mémoire (34) permettant d'enregistrer une première carte de distance Doppler délivrée par l'unité TFR en deux dimensions ;
**caractérisé en ce que** l'appareil comprend en outre :
une première unité de déformation (36) permettant d'appliquer un décalage de distance à chaque point dans la carte de distance Doppler enregistrée ; et
un premier intégrateur (38) permettant d'ajouter une carte de distance Doppler actuelle, délivrée par l'unité de calcul de TFR en deux dimensions, et une version décalée (82) d'une carte de distance Doppler précédente délivrée par la première unité de déformation ;
le décalage de distance étant proportionnel à la période de temps entre la carte de distance Doppler actuelle et la carte de distance Doppler enregistrée et à la vitesse Doppler de chaque point.

2. Appareil de traitement de signaux (40) selon la revendication 1 comprenant en outre :
une seconde mémoire (42) permettant d'enregistrer une deuxième carte de distance Doppler (80),
le premier intégrateur (38) étant configuré pour ajouter la carte de distance Doppler actuelle, délivrée par l'unité de calcul de TFR en deux dimensions (32), et une version décalée (82) d'une carte de distance Doppler précédente délivrée par la première unité de déformation (36) ;

3. Appareil de traitement de signaux (40) selon la revendication 2 dans lequel la seconde mémoire (42) est configurée pour recevoir une carte de distance Doppler (80) délivrée par la première mémoire (34).

4. Appareil de traitement de signaux (40) selon la revendication 2 dans lequel la seconde mémoire (42) est configurée pour recevoir une carte de distance Doppler (80) délivrée par l'unité de calcul de TFR en deux dimensions (32).

5. Appareil de traitement de signaux (40) selon l'une quelconque des revendications 2 à 4 comprenant en outre :
une seconde unité de déformation (44) permettant de décaler la carte de distance Doppler enregistrée dans la seconde mémoire (42),
le premier intégrateur (38) étant configuré pour ajouter la carte de distance Doppler actuelle, délivrée par l'unité de calcul de TFR en deux dimensions (32), une version décalée (82) d'une carte de distance Doppler précédente délivrée par la première unité de déformation (36) et une version décalée (82) d'une carte de distance Doppler précédente délivrée par la seconde unité de déformation (44).

6. Appareil de traitement de signaux (50) selon la revendication 1 comprenant en outre :
une seconde unité de déformation (52) permettant de décaler la carte de distance Doppler enregistrée ; et
un second intégrateur (54),
le premier intégrateur (38) étant configuré pour ajouter la carte de distance Doppler actuelle, délivrée par l'unité de calcul de TFR en deux dimensions (32), et une version décalée (82) d'une carte de distance Doppler précédente délivrée par la première unité de déformation (36), le second intégrateur étant configuré pour ajouter la carte de distance Doppler actuelle, délivrée par l'unité de calcul de TFR en deux dimensions, et une version décalée (82) d'une carte de distance Doppler précédente délivrée par la seconde unité de déformation.

7. Appareil de traitement de signaux (60, 70) permettant de générer une carte de distance Doppler (86), l'appareil comprenant :
une unité de calcul de transformée de Fourier rapide (TFR) en deux dimensions (32) permettant de calculer une carte de distance Doppler (80), la carte de distance Doppler comprenant une pluralité de points, chaque point ayant une valeur de distance et une valeur de vitesse Doppler ;
un premier intégrateur (64) ; et
une première unité de déformation (62),
la première unité de déformation étant configurée pour recevoir une carte de distance Doppler (80) délivrée par le premier intégrateur ;
**caractérisé en ce que** :
la première unité de déformation est en outre configurée pour appliquer un décalage de distance à chaque point dans la carte de distance Doppler reçue ;
le premier intégrateur est configuré pour ajouter une carte de distance Doppler actuelle (80), délivrée par l'unité de calcul de TFR en deux dimensions, et la version décalée (82) d'une carte de distance Doppler précédente délivrée par la première unité de déformation ; et
le décalage de distance est proportionnel à la période de temps entre la carte de distance Doppler actuelle et la carte de distance Doppler enregistrée et à la vitesse Doppler de chaque point.

8. Appareil de traitement de signaux (70) selon la revendication 7 comprenant en outre :
un second intégrateur (74) ; et
une seconde unité de déformation (72),
la seconde unité de déformation étant configurée pour recevoir une carte de distance Doppler (80) délivrée par le second intégrateur et pour décaler la carte de distance Doppler reçue, et le second intégrateur étant configuré pour ajouter une carte de distance Doppler actuelle (80), délivrée par l'unité de calcul de TFR en deux dimensions (32), et la version décalée (82) d'une carte de distance Doppler précédente délivrée par la seconde unité de déformation.

9. Système radar (10) comprenant un appareil de traitement de signaux (30, 40, 50, 60, 70) selon l'une quelconque des revendications précédentes.
